**Europäisches Patentamt**

**European Patent Office**

**Office européen des brevets**

(19)

(11) Veröffentlichungsnummer: **0 099 058**
**B1**

(12)
## EUROPÄISCHE PATENTSCHRIFT

(45) Veröffentlichungstag der Patentschrift:
**23.04.86**

(21) Anmeldenummer: **83106588.3**

(22) Anmeldetag: **06.07.83**

(51) Int. Cl.⁴: **C 08 G  69/16, C 08 G  69/18,
C 08 G  69/20**

(54) **Verfahren zur Herstellung von schrumpfarmen Polyamid-Formkörpern.**

(30) Priorität: **06.07.82 DE 3225138
06.07.82 DE 3225137**

(43) Veröffentlichungstag der Anmeldung:
**25.01.84 Patentblatt 84/4**

(45) Bekanntmachung des Hinweises auf die Patenterteilung:
**23.04.86 Patentblatt 86/17**

(84) Benannte Vertragsstaaten:
**DE FR GB IT NL SE**

(56) Entgegenhaltungen:
**DE - A - 2 103 004
FR - A - 2 107 904
US - A - 3 470 139
US - A - 3 539 662**

**Patent Abstracts of Japan Band 3, Nr. 7, 24 Januar 1979
Seite 26 C 34**

(73) Patentinhaber: **BASF Aktiengesellschaft,
Carl-Bosch-Strasse 38, D-6700 Ludwigshafen (DE)**

(72) Erfinder: **Horn, Peter, Dr., Neue Stuecker 15,
D-6900 Heidelberg (DE)**
Erfinder: **Buensch, Hellmut, Dr., Panoramastrasse 81,
D-6906 Leimen (DE)**
Erfinder: **Hesse, Anton, Dr., Peter-Nickel-Strasse 15,
D-6940 Weinheim (DE)**
Erfinder: **Marx, Matthias, Dr., Seebacher Strasse 49,
D-6702 Bad Duerkheim (DE)**
Erfinder: **Nissen, Dietmar, Dr., Ziegelhaeuser
Landstrasse 31, D-6900 Heidelberg (DE)**
Erfinder: **Heckmann, Walter, Dr., Geiersbergstrasse 2,
D-6940 Weinheim (DE)**

**Beschreibung**

Die Herstellung von Polyamid-Formkörpern durch aktivierte alkalische Lactampolymerisation ist bekannt. Sie ist beispielsweise in Kunststoff-Handbuch, Band VI, Polyamide, Carl-Hanser-Verlag 1966, Seiten 46 bis 49 ausführlich beschrieben.

Dabei geht man von zwei Komponenten A und B aus, wobei die Komponente A eine Katalysator enthaltende Lactam-Schmelze und die Komponente B eine Aktivator enthaltende Lactam-Schmelze ist. Die beiden Komponenten werden gemischt, in eine Form transportiert und dort polymerisiert. Dies kann nach dem aus der Polyurethan-Technology bekannten Reaktionsspritzguss (RIM)-Verfahren geschehen. Da z.B. bei der Polymerisation von Caprolactam zu Polyamid-6 eine Volumenschrumpfung um etwa 15% eintritt, zeigen die erhaltenen Formkörper eine unruhige Oberfläche, Schrumpfdellen und Lunker, die auch durch Nachdrücken von Monomeren während der Polymerisation nicht ganz beseitigt werden können.

Diese Erscheinungen können auch nicht vollständig unterdrückt werden, wenn man nach der US-A-3 470 139 die Polyamid-Formkörper in Gegenwart bestimmter Polyether oder Paraffine als Kristallisations-Modifikatoren herstellt.

Der Erfindung lag nun die Aufgabe zugrunde, diese Nachteile zu überwinden und ein Verfahren zur Herstellung schrumpfbarer Polyamid-Formkörper zu entwickeln, die frei von Lunkern und Einfallstellen sind und eine glatte Oberfläche aufweisen.

Es wurde gefunden, dass diese Aufgabe gelöst werden kann, wenn man bei der aktivierten alkalischen Polymerisation von Lactamen in Gegenwart von 5 bis 80 Gew.-%, bezogen auf das Lactam, eines Polymeren P arbeitet, welches

1. im Lactam vollkommen löslich ist,
2. sich im Verlauf der Polymerisation bei einem Umsatz zwischen 1 und 50%, vorzugsweise zwischen 2 und 40% entmischt,
3. aus mindestens zwei chemisch unterschiedlichen Blöcken aufgebaut ist, wobei mindestens einer der Blöcke mit Polylactam verträglich und mindestens einer der Blöcke mit Polylactam nicht verträglich ist, und welches vorzugsweise
4. funktionelle Gruppen aufweist, die in wachsende Polylactamkette einpolymerisiert werden können.

Bevorzugtes Lactam ist ε-Caprolactam, darüber hinaus können auch Pyrrolidon, Capryllactam, Laurinlactam, Önanthlactam sowie die entsprechenden C-substituierten Lactame eingesetzt werden.

Die Polymerisation erfolgt in Gegenwart von 50 bis 80, vorzugsweise 10 bis 30 Gew.-% eines Polymeren P, vorzugsweise eines Pfropfpolymeren, welches mindestens einen Polystyrolblock und mindestens einen Polyether-, Polyurethan-, Polyamid-, Polyester- oder Poly(meth)-acrylsäureester-Block enthält.

Bevorzugte Pfropfpolymere P bestehen aus

W) 2 bis 50 Gew.-% ethylenisch ungesättigter Präpolymerer mit einem Molekulargewicht zwischen 1000 und 100 000 (Zahlenmittel) und einem mittleren Gehalt an olefinischen Doppelbindungen von 0,2 bis 1,5 je Präpolymer-Molekül,

X) 98 bis 50 Gew.-% monoolefinisch ungesättigter Monomerer, und gegebenenfalls

Y) 0 bis 10 Gew.-% monoolefinisch ungesättigter Monomerer, die eine funktionelle Gruppe tragen, welche in die wachsende Polylactamkette einpolymerisiert werden kann,

Z) 0 bis 10 Gew.-% mehrfach ungesättigter Monomerer.

Als Präpolymere (W) sind Polymere mit Zahlenmittel-Molekulargewichten von 3000 bis 100 000, vorzugsweise 3000 bis 50 000, besonders bevorzugt 4000 bis 20 000 geeignet, die im arithmetischen Mittel 0,2 bis 1,5, bevorzugt 0,5 bis 1,2 olefinische Doppelbindungen je Molekül Präpolymerer enthalten. Die Präpolymeren werden hergestellt durch Einführung von olefinischen Doppelbindungen in Polymer (a).

Diese Polymeren (a) können handelsübliche Polyester mit COOH- und/oder OH-Endgruppen, Polyamide mit COOH- und/oder $NH_2$-Endgruppen, Polyetherole, Polyesterole, Polyurethane mit OH- und/oder NCO-Endgruppen, Polyharnstoffe mit $NH_2$- und/oder NCO-Endgruppen aber auch (Co)polymerisate sein, die durch ionische Polymerisation und Einführung funktioneller Gruppen durch die Abbruchreaktion hergestellt worden sind.

Die Umwandlung der Polymeren (a) in olefinisch ungesättigte Präpolymere (W) erfolgt in der Regel durch Umsetzung der Endgruppen mit monoolefinisch ungesättigten Reagenzien. So können Polymere mit NCO-Endgruppen mit solchen Verbindungen zur Reaktion gebracht werden, die eine olefinische Doppelbindung und mindestens eine acide Wasserstoffe enthaltende Gruppierung aufweisen. Dazu gehören olefinisch ungesättigte (Di)carbonsäuren wie (Meth)acryl-, Croton-, Malein- und Fumarsäure sowie die Halbester der genannten Dicarbonsäuren, ungesättigte Alkohole wie Alkylalkohol, Ehteralkohole wie Trimethylolpropanallylether, Neopentylglycolallylether oder Hydroxybutylvinylether, Esteralkohole wie Hydroxyethyl-, -propyl- oder -butyl(meth)acrylat, ungesättigte Amine wie Aminoethyl(meth)acrylat.

Polymere (a) mit OH-Endgruppen können zu Präpolymeren (W) umgesetzt werden durch Reaktion mit monoolefinisch ungesättigten (Di)carbonsäuren, wie sie oben genannt sind, bzw. deren Anhydriden, Halogeniden oder niederen Alkylestern, olefinisch ungesättigten Epoxiden wie Glycidyl(meth)acrylat oder Glycidylallylether, oder auch durch Umsetzung mit Diisocyanaten und Reagenzien, wie sie für NCO-Endgruppen aufgeführt sind.

Weisen Polymere (a) COOH-Endgruppen auf, so sind Umsetzungen mit den oben bereits genannten olefinisch ungesättigten Alkoholen oder Epoxiden bzw. mit Diisocyanaten und den für NCO-Endgruppen beschriebenen Verbindungen zu den Präpolymeren (W) möglich.

Polymere (a) mit $NH_2$-Endgruppen können mit den bereits aufgeführten ungesättigten Epoxiden oder mit Diisocyanaten und den für NCO-Endgruppen genannten H-aciden Verbindungen zu Präpolymeren (W) reagieren.

Die Herstellung der olefinisch ungesättigten Präpolymeren (W) muss nicht notwendig in zwei Schritten — (1) der Herstellung der Präpolymeren (a) und (2) Umsetzung mit olefinisch ungesättigten Reagenzien — erfolgen. Es ist in einigen Fällen auch möglich, bereits bei der Herstellung der Präpolymeren geeignete Anteile an olefinisch ungesättigten Verbindungen zu verwenden, um direkt zu den Präpolymeren (W) zu gelangen. Dazu gehörte insbesondere, bei der Herstellung von Polyestern Maleinsäure, deren Anhydrid oder Halbester zu verwenden. Auch ist es beispielsweise möglich, Polyurethane unter Verwendung olefinisch ungesättigter Diole wie Buten-(2)--diol-(1,4) bzw. zum endständigen Einbau Allylalkohole bzw. Hydroxyethyl-, -propyl- oder -butyl(meth)-acrylat herzustellen. In Polyether können die oben genannten, olefinisch ungesättigten Epoxide bzw. Alkohole bereits bei der Herstellung eingebaut werden.

Bevorzugt werden jedoch solche Präpolymeren (W), die endständige Doppelbindungen enthalten.

Die aufgeführten reaktiven Gruppen der Polymeren (a) müssen nicht notwendig endständig sein, es ist jedoch bevorzugt, Polymere (a) mit überwiegend oder ausschliesslich endständigen reaktiven Gruppen einzusetzen. Die Polymeren (a) weisen 1 bis 4 Äquivalente an reaktiven Gruppen je Mol auf. Bevorzugt werden Polymere (a) mit 1 bis 2 Äquivalenten.

Als Polymere (a) sind ferner durch ionische Polymerisation hergestellte und mit Hilfe der Abbruchreaktion funktionalisierte Produkte geeignet. Dazu gehören insbesondere durch anionische Polymerisation hergestellte lebende Polymere, die durch Abbruchreaktion, beispielsweise mit Ethylen- oder Propylenoxid funktionalisiert werden können. Anschliessend können olefinische Doppelbindungen auf dem oben für OH-Endgruppen beschriebenen Weg eingeführt werden. Es ist jedoch auch möglich, als Abbruchreagenz bereits Verbindungen zu verwenden, die olefinische Doppelbindungen enthalten, sofern die zum Kettenabbruch führende Reaktion sehr viel schneller ist als gegebenenfalls die Polymerisation der olefinischen Doppelbindung. Geeignete Verbindungen dieser Art sind z.B. Glycidyl(meth)acrylate oder Allylbromid.

Geeignete Monomere (X) sind z.B. Vinylaromaten mit 8 bis 20 C-Atomen, Olefine mit 2 bis 20 C-Atomen, Carbonsäurevinylester mit 1 bis 20 C-Atomen im Carbonsäurerest, Vinylether mit 3 bis 20 C-Atomen, Vinylketone, Vinylhalogenide, Allylverbindungen, $\alpha,\beta$-olefinisch ungesättigte Mono- oder Dicarbonsäuren mit 3 bis 5 C-Atomen, deren Nitrile, Anhydride und Ester mit 1 bis 20 C-Atomen im Alkoholrest, wobei Styrol und Methylmethacrylat bevorzugt sind.

Als Komponenten (Y) sind solche Monomere verwendbar, die mindestens eine olefinische Doppelbindung enthalten, so dass eine radikalische Copolymerisation mit (W) und (X) möglich ist, und daneben noch eine bei der aktivierten anionischen Lactampolymerisation copolymerisierbare funktionelle Gruppe aufweisen.

Dazu gehören Amide $\alpha,\beta$-olefinisch ungesättigter Carbonsäuren wie (Meth)acrylsäure-, Crotonsäure-, Maleinsäure(halb)amid, deren N-Alkylderivate mit 1 bis 12 C-Atomen im Alkylrest, N-Vinylverbindungen wie N-Vinylformamid, N-Vinylpyrrolidon, N-Vinylcaprolactam und N-(Meth)-arcylcaprolactam, wobei N-Vinylpyrrolidon, N-Vinylcaprolactam, N-Acrylolylcaprolactam und (Meth-)Acrylsäureamid bevorzugt sind.

Der Anteil an Monomeren (Y) im Pfropfpolymerisat P kann bis zu 10 Gew.-% betragen. Bevorzugt liegt der Anteil zwischen 0,01 und 8, insbesondere zwischen 0,1 und 5 Gew.-%. Die Verwendung hoher Anteile an Monomeren (Y) wird meist aus Kostengründen ungünstig sein.

Geeignete mehrfach ungesättigte Comonomere (Z) sind z.B. Diolefine mit 4 bis 10 C-Atomen, Ester olefinisch ungesättigter Carbonsäuren und mehrwertigen Alkoholen, sowie Vinyl- oder Allylether mehrwertiger Alkohole.

Es ist grundsätzlich auch möglich, in das ethylenisch ungesättigte Präpolymere (W) funktionelle Gruppen einzubauen, beispielsweise Lactam- oder Urethangruppen. So kann man z.B. Polyesterole oder Polyetherole mit Diisocyanaten kettenverlängern und anschliessend olefinische Doppelbindungen einführen.

Die Herstellung der Pfropfpolymeren P erfolgt in der Regel durch radikalische Copolymerisation, die durch energiereiche Strahlung bzw. bevorzugt durch in Radikale zerfallende Verbindungen wie Azoverbindungen, Diacyl-, Dialkyl-, Hydro-peroxide oder Perester initiiert werden kann.

Die Pfropfpolymeren P sind im Lactam vollkommen löslich, mit Polylactam jedoch nicht mischbar, so dass sie sich bei einem Umsatz zwischen 1 und 50%, vorzugsweise 2 bis 40% entmischen.

Die erfindungsgemässen Polyamid-Formkörper werden nach dem bekannten Verfahren der aktivierten alkalischen Lactampolymerisation hergestellt. Dabei geht man von zwei Komponenten A und B aus. Komponente A stellt eine Lactam-Schmelze dar, die einen Katalysator enthält, Komponente B ist eine Lactam-Schmelze, die einen Aktivator enthält.

Geeignete Katalysatoren sind z.B. Alkali- und Erdalkaliverbindungen von Lactamen, wie Natrium-$\varepsilon$-caprolactamat, oder von kurzkettigen aliphatischen Carbonsäuren, wie Natrium- oder Kaliumformiat, oder von Alkoholen mit 1 bis 6 Kohlenstoffatomen, wie Natriummethylat oder Kalium-tert.-butylat. Ausserdem können auch Alkali- oder Erdalkalihydride, -hydroxyde oder -carbonate verwendet werden, sowie Grignard-Verbindungen. Die Katalysatoren werden üblicherweise in Mengen von 0,1 bis 10 Mol-%, bezogen auf Gesamt-Lactam, eingesetzt.

Als Aktivatoren kommen in Frage: N-Acyllactame, wie N-Acetylcaprolactam, substituierte Triazine, Carbodiimide, Cyanamide, Mono- und Polyisocyanate, sowie maskierte Isocyanatverbindungen. Sie werden bevorzugt in Mengen von 0,1 bis 10 Mol-% eingesetzt.

Die Schlagzähigkeit der Formmassen kann durch übliche Zusätze, wie Polyalkylenglykole mit Molekulargewichten von 2000 bis 100 000 erhöht werden, ferner durch Zusatz von reaktiven oder nicht reaktiven Kautschuken.

Die Polymerisation des Lactams kann in Gegenwart üblicher Stabilisatoren durchgeführt werden.

Besonders vorteilhaft ist eine Kombination von CuJ und KJ im Molverhältnis 1 : 3, die in Mengen von 50 bis 100 ppm Kupfer, bezogen auf Gesamtlactam, der aktivatorhaltigen Komponente B zugesetzt wird. Weitere geeignete Stabilisatoren sind Kryptophenole und Amine.

Der aktivatorhaltigen Komponente B können ferner Keimbildner, wie Talkum oder Polyamid-2,2 in Mengen von bis zu 2 Gew.-%, gegebenenfalls zusammen mit Peroxiden, zugesetzt werden.

Weitere übliche Zusätze sind Regler, Pigmente, Farbstoffe, Weichmacher, Füllstoffe, Fasern, Flammschutzmittel und Treibmittel.

Der aktivatorhaltigen Komponente B können auch nicht vernetzte, präpolymere Isocyanate in Mengen von 1 bis 30 Gew.-%, bezogen auf Gesamt-Lactam, zugesetzt werden. Dabei sind z.B. solche Substanzen geeignet, die durch Kettenverlängerung von Isocyanaten mit Polyether/Polyesterolen hergestellt wurden. Sie weisen einen Isocyanatgehalt von 0,1 bis 10 Gew.-% auf. Sie können auch während der Polymerisation des Lactams mit der äquivalenten Menge Polyol umgesetzt werden, indem man der katalysatorhaltigen Lactam-Schmelze das Polyol und vorteilhafterweise einen urethanbildenden Katalysator zugibt.

Weiterhin können in Lactam lösliche Polymere, wie z.B. hochmolekulare Polyester, nicht vernetzte Polyurethane, Polytetrahydrofuran, sowie durch Polykondensation hergestellte Copolyamide in Mengen von 1 bis 30 Gew.-% zugesetzt werden.

Schliesslich können auch polymerisierbare Kautschuke zugesetzt werden, die in situ radikalisch durch Peroxide und gegebenenfalls Beschleuniger, wie Cobaltnaphthenat auf die Polylactamkette aufgepfropft werden.

Die Komponenten A und B werden bei Temperaturen zwischen 70 und 140°C, vorzugsweise zwischen 100 und 135°C, intensiv gemischt, in eine Form transportiert und bei Temperaturen zwischen 130 und 200°C polymerisiert. Die dabei angewandte Verfahrensweise entspricht der Reaktionsspritzguss-Technik, die für Polyurethane z.B. von Piechota und Röhr in «Integralschaumstoff», Carl-Hanser-Verlag 1975, Seiten 34 bis 37 beschrieben ist.

Kleinere Platten und Formteile können mit Niederdruck-Dosieranlagen hergestellt werden, wobei die Befüllung in die offene Form erfolgt. Dabei empfiehlt es sich, kleinere Mischkammern mit teflonbeschichteten Oberflächen und ebensolchen Rührorganen zu verwenden.

Bevorzugt werden die erfindungsgemässen Formkörper jedoch mit einer Hochdruck-Dosieranlage hergestellt. Die Vermischung der Komponenten erfolgt hier in Art einer Gegenstromverdüsung.

Das dabei entstehende Halbzeug kann dann durch Verpressen, vorzugsweise oberhalb des Schmelzpunktes des Polyamids zum Fertigteil verarbeitet werden.

Die nach dem erfindungsgemässen Verfahren hergestellten Formkörper zeichnen sich durch ausgezeichnete Oberflächenqualität, gute mechanische Eigenschaften und kurze Formstandzeiten aus. Sie eignen sich insbesondere als Formteile für die Automobilindustrie, beispielsweise Karosserieteile, wie Kotflügel und Türen, oder für technische Gehäuseteile.

Die in den Beispielen genannten Teile und Prozente beziehen sich auf das Gewicht. Die K-Werte wurden nach Fikentscher, Cellulosechemie 13, S. 58 (1932) gemessen; die DSC-Werte wurden mit einem Perkin-Elmer-Gerät mit einer Einwaage von 7 mg bei einer Aufheizrate von 20°K/min bestimmt.

*Beispiel 1*

a) Herstellung des Pfropfpolymerisats P1

80 Teile eines aus 200 Mol Ethylenoxid je Mol Ethylenglycol hergestellten Polyethers wurden mit 0,8 Teilen Maleinsäureanhydrid, 0,9 Teilen Bernsteinsäureanhydrid, 40 Teilen Toluol 30 Minuten lang auf 120°C erwärmt. Das entstandene Präpolymere W weist ein mittleres Molekulargewicht von 8040 und 0,8 olefinische Doppelbindungen pro Molekül auf. Anschliessend gab man in $2^{1}/_{2}$ Stunden 320 Teile Styrol, 4 Teile Benzoylperoxid und 40 Teile Toluol zu, liess 2 Stunden auspolymerisieren. Das entstandene Pfropfpolymerisat P1 besteht im wesentlichen aus einem Polystyrolblock und mehreren, kammartig angebauten Polyetherblöcken. Dann gab man 600 Teile ε-Caprolactam hinzu und destillierte die flüchtigen Anteile bei 100°C und einem Restdruck von 80 mbar ab. Die Lösung hat einen Festgehalt von 42,3% und einen K-Wert von 47,2.

b) Herstellung des Polyamidformkörpers

Zusammensetzung der A-Komponente:
205,5 Teile ε-Caprolactam
 25,0 Teile 17,5%ige Lösung von Natriumlactamat
     in Caprolactam

Zusammensetzung der B-Komponente:
 94,5 Teile ε-Caprolactam
100,0 Teile Pfropfpolymerisat P1
 36,0 Teile einer Lösung aus 83,5% Caprolactam
     und 16,5% Hexamethylendiisocyanat

*Versuchsdurchführung:*

Die Komponenten A und B wurden in einer Giessmaschine (Niederdruckmaschine) der F-Reihe (Fa. Elastogran Maschinenbau, Strasslach bei München) in einem Mischkopf (Mischtemperatur 125 bis 135°C) mit einem Aluminium-Schneckenrührer mit 8000 U/min gemischt. Die Ausstossmenge bei einem Mischungsverhältnis von 1 : 1 betrug 19,5 g pro Sekunde. Die Mischung wurde in eine offene auf 150°C beheizte Form gegossen. Die Entformzeit betrug 1,5 Minuten. Es wurde eine Platte mit einwandfreier glatter Oberfläche erhalten. Der Schmelzpunkt nach DSC betrug 222°C. Der K-Wert (0,5%ig in Phenol/o-Dichlorbenzol) der Probe betrug 118. Die Entmischung des Pfropfpolymeren P aus der Polymerisationslösung war bei einem Umsatz von 6,5% eingetreten.

*Beispiel 2*

a) Herstellung des Pfropfpolymerisats P2

80 Teile eines Polyethers, der aus 200 Mol Ethylenoxid pro Mol Ethylenglycol hergestellt worden war, 0,8 Teile Maleinsäureanhydrid, 0,99 Teile Bernsteinsäureanhydrid und 40 Teile Toluol wurden 1 Stunde auf 120°C erwärmt. Das entstandene Präpolymer W2 wies ein mittleres Molekulargewicht von 8040 und 0,8 olefinische Doppelbindungen pro Molekül auf. Man gab anschliessend 305 Teile Styrol, 15 Teile N-Vinylpyrrolidon, 4 Teile Benzoylperoxid und 40 Teile Toluol in 2 Stunden zu, liess 3 Stunden auspolymerisieren, verdünnte mit 600 Teilen geschmolzenem ε-Caprolactam, destillierte die flüchtigen Anteile wie bei Polymer P1 beschrieben ab und trug eine Lösung mit Festgehalt 41,5% und K-Wert 43,0 aus.

b)  Herstellung des Pfropfpolymerisats P3

80 Teile eines Polyethers aus 200 Mol Ethylenoxyd je Mol Ethylenglycol wurden mit 40 Teilen Toluol und 1,3 Teilen Glycidylmethacrylat 1 Stunde auf 50°C erwärmt. Das Präpolymer W3 hat ein Molekulargewicht von 8100 und 0,9 Doppelbindungen pro Molekül. Anschliessend gab man 4 Teile Acrylamid zu, erhitzte auf 80°C, fügte während 2 Stunden 316 Teile Styrol, 4 Teile Benzoylperoxid und 40 Teile Ethylacetat hinzu, liess weitere 4 Stunden auspolymerisieren, gab 600 Teile ε-Caprolactam hinzu und destillierte die flüchtigen Anteile ab. Die Lösung hat einen Feststoffanteil von 42,3% und einen K-Wert von 43,4.

c)  Herstellung des Polyamidformkörpers

Zusammensetzung der A-Komponente:
101 Teile ε-Caprolactam
  15 Teile 17,5%ige Lösung von Natriumlactamat
           in Caprolactam

Zusammensetzung der B-Komponente:
  24 Teile ε-Caprolactam
  50 Teile  Pfropfpolymerisat P2
  25 Teile Pfropfpolymerisat P3
  17 Teile einer Lösung aus 83,5% Caprolactam und
           16,5% Hexamethylendiisocyanat

Die Versuchsdurchführung erfolgt wie im Beispiel 1 beschrieben. Es wurde eine Platte mit einwandfreier Oberfläche erhalten. Der Schmelzpunkt nach DSC betrug 220°C. Der K-Wert betrug 113. Der Molau-Test war positiv, die Entmischung der Pfropfpolymeren P2 und P3 war nach einem Umsatz von 12,1% eingetreten.

*Beispiel 3*

a)  Herstellung des Polymerisats P4

Mit Allylalkohol als Starter und 0,1 Teile KOH als Katalysator wurde ein Blockpolyether (W4) aus 16 Teilen Propylenoxid und 84 Teilen Ethylenoxid mit Zahlenmittelmolekulargewicht 5560 und im Mittel 1,0 olefinischen Doppelbindungen je Molekül hergestellt.

28 Teile dieses Blockpolyethers wurden in 35 Teilen ε-Caprolactam aufgenommen, auf 130°C erwärmt, 56 Teile α-Methylstyrol, 0,3 Teile Acryloylcaprolactam und 0,7 Teile Benzoylperoxid in 7 Teilen Toluol wurden während 4 Stunden zugegeben, nach weiteren 2 Stunden Rühren wurden flüchtige Anteile bei 120°C und einem Restdruck von 50 mbar abdestilliert. Man erhielt ein Produkt mit Festgehalt 70%.

b)  Herstellung des Polyamidformkörpers

Zusammensetzung der A-Komponente:
43 Teile Caprolactam
  7 Teile 17,5%ige Lösung von Natriumlactamat
          in Caprolactam

Zusammensetzung der B-Komponente:
21,43 Teile Polymerisat P4
19,32 Teile ε-Caprolactam
  8,75 Teile einer Lösung aus 83,5% Caprolactam und
            16,5% Hexamethylendiisocyanat

*Versuchsdurchführung:*

Die Komponenten A und B wurden in einer Hochdruckmaschine nach der RIM-Technologie in einem selbstreinigenden Hochdruckmischkopf im Verhältnis 1 : 1 gemischt und mit einer Austragsleistung von 90 cm³/sec in eine auf 150°C geheizte Form mit den Formnestabmessungen 670 × 270 × 4 mm eingetragen.

Nach 2 Minuten wurde das fertige Formteil entnommen. Das erhaltene Formteil hatte eine sehr gute Oberfläche. Der K-Wert (0,5% in Phenol/o-Dichlorbenzol 1 : 1) der Probe betrug 117.

**Patentansprüche**

1.  Verfahren zur Herstellung von schrumpfarmen Polyamid-Formkörpern durch aktivierte alkalische Polymerisation von Lactamen, wobei eine Komponente A, die Lactam und einen Katalysator enthält, und eine Komponente B, die Lactam und einen Aktivator enthält, bei 70 bis 140°C intensiv gemischt, in eine Form transportiert und dort bei 130 bis 200°C polymerisiert werden, dadurch gekennzeichnet, dass die Polymerisation in Gegenwart von 5 bis 80 Gew.-%, bezogen auf das Lactam, eines Polymeren P durchgeführt wird, welches
1.  im Lactam vollkommen löslich ist,
2.  sich im Verlauf der Polymerisation bei einem Umsatz zwischen 1 und 50% entmischt, und
3.  aus mindestens zwei chemisch unterschiedlichen Blöcken aufgebaut ist, wobei mindestens einer der Blöcke mit Polylactam verträglich und mindestens einer der Blöcke mit Polylactam nicht verträglich ist.

2.  Verfahren nach Anspruch 1, dadurch gekennzeichnet, dass das Polymere P funktionelle Gruppen aufweist, die in die wachsende Polylactamkette einpolymerisiert werden.

3.  Verfahren nach Anspruch 1, dadurch gekennzeichnet, dass das Polymere P ein Pfropfpolymerisat ist aus

W)  2 bis 50 Gew.-% ethylenisch ungesättigter Präpolymerer mit einem Molekulargewicht zwischen 1000 und 100 000 (Zahlenmittel) und einem mittleren Gehalt an olefinischen Doppelbindungen von 0,2 bis 1,5 je Präpolymer-Molekül,

X) 98 bis 50 Gew.-% monoolefinisch ungesättigter Monomerer, und gegebenenfalls

Y) 0 bis 10 Gew.-% monoolefinisch ungesättigter Monomerer, die eine funktionelle Gruppe tragen, welche in die wachsende Polylactamkette einpolymerisiert werden kann, sowie

Z) 0 bis 10 Gew.-% mehrfach ungesättigter Monomerer.

4. Verfahren nach Anspruch 1, dadurch gekennzeichnet, dass der mit Polylactam unverträgliche Block ein Polystyrolblock ist.

5. Verfahren nach Anspruch 1, dadurch gekennzeichnet, dass der mit Polylactam verträgliche Block ein Polyether-, Polyurethan-, Polyamid-, Polyester- oder Poly(meth)-acrylsäureester-Block ist.

6. Verfahren nach Anspruch 3, dadurch gekennzeichnet, dass das Monomere Y N-Vinylpyrrolidon, N-Vinylcaprolactam, (Meth-)Acrylamid oder Acryloylcaprolactam ist.

7. Verfahren nach Anspruch 1, dadurch gekennzeichnet, dass die Polymerisation nach der Reaktionsspritzguss-Technologie durchgeführt wird.

8. Verfahren nach Anspruch 1, dadurch gekennzeichnet, dass der Aktivator enthaltenden Komponente B als Stabilisatoren Kryptophenole, Amine oder ein Gemisch von CuJ und KJ im Molverhältnis 1 : 3 zugesetzt werden.

## Claims

1. A process for the production of a low-shrinkage nylon molding by activated alkaline polymerization of lactams, a component A, which contains the lactam and a catalyst, and a component B, which contains the lactam and an activator, being mixed thoroughly at from 70 to 140°C, and the mixture being transported into a mold and polymerized therein at from 130 to 200°C, wherein the polymerization is carried out in the presence of from 5 to 80% by weight, based on the lactam, of a polymer P which

1. is completely soluble in the lactam,
2. separates out in the course of the polymerization at a conversion of from 1 to 50%, and
3. is composed of two or more chemically different blocks, one or more of these blocks being compatible with polylactam and one or more of them being incompatible therewith.

2. A process as claimed in claim 1, wherein the polymer P possesses functional groups which are incorporated, as copolymerized units, into the growing polylactam chain.

3. A process as claimed in claim 1, wherein the polymer P is a graft polymer comprising

W) from 2 to 50% by weight of ethylenically unsaturated prepolymers having a number average molecular weight of from 1,000 to 100,000 and containing, on average, from 0,2 to 1.5 olefinic double bonds per prepolymer molecule, and

X) from 98 to 50% by weight of monoolefinically unsaturated monomers, with or without

Y) from 0 to 10% by weight of monoolefinically unsaturated monomers which bear a functional group which can be incorporated, as a copolymerized unit, into the growing polylactam chain, and

Z) from 0 to 10% by weight of polyunsaturated monomers.

4. A process as claimed in claim 1, wherein the block which is incompatible with polylactam is a polystyrene block.

5. A process as claimed in claim 1, wherein the block which is compatible with polylactam is a polyether, polyurethane, nylon, polyester, polyacrylate or polymethacrylate block.

6. A process as claimed in claim 3, wherein the monomer Y is N-vinylpyrrolidone, N-vinylcaprolactam, acrylamide, methacrylamide or acryloylcaprolactam.

7. A process as claimed in claim 1, wherein the polymerization is carried out by the reaction injection molding thechnique.

8. A process as claimed in claim 1, wherein a cryptophenol, an amine or a mixture of CuI and KI in a molar ratio of 1:3 is added, as stabilizer, to the activator-containing component B.

## Revendications

1. Procédé de préparation de corps moulés en polyamide, à faible retrait, par polymérisation alcaline de lactames, un composant A, qui contient le lactame et un catalyseur, et un composant B, qui contient le lactame et un activateur, étant mélangés de façon intense, entre 70 et 140°C, transportés dans un moule, et y être polymérisés entre 130 et 200°C, caractérisé par le fait que la polymérisation est effectuée en présence de 5 à 80% en poids, rapportés au lactame, d'un polymère P qui

1. est totalement soluble dans le lactame,
2. est soumis, ou cours de la polymérisation, à une démixtion en proportion de 1 à 50%, et
3. est formé d'au moins deux blocs chimiquement différents, un des blocs au moins étant compatible avec le polylactame et un des blocs au moins n'étant pas compatible avec le polylactame.

2. Procédé selon la revendication 1, caractérisé par le fait que le polymère P possède des groupes fonctionnels qui entrent en polymérisation dans la chaîne de polylactame croissante.

3. Procédé selon la revendication 1, caractérisé par le fait que le polymère P est un polymérisat par greffe de

W) 2 à 50% en poids de prépolymère à insaturation éthylénique, d'un poids moléculaire compris entre 1000 et 100 000 (moyenne) et d'une teneur moyenne en doubles liaisons oléfiniques de 0,2 à 1,5 par molécule de prépolymère,

X) 98 à 50% en poids de monomères à insaturation monooléfinique et, éventuellement

Y) 0 à 10% en poids de monomères à insaturation monooléfinique qui portent un groupe fonctionnel susceptible d'entrer en polymérisation dans une chaîne de polylactame croissante, ainsi que

Z) 0 à 10% en poids de monomères à insaturation multiple.

4. Procédé selon la revendication 1, caractérisé par le fait que le bloc incompatible avec le polylactame est un bloc de polystyrène.

5. Procédé selon la revendication 1, caractérisé par le fait que le bloc compatible avec le polylactame est un bloc polyéther, polyuréthane, polyamide, polyester ou poly(méth)-acrylester.

6. Procédé selon la revendication 3, caractérisé par le fait que le monomère Y est N-vinylpyrolidine, N-vinylcaprolactame, (Meth)-acrylamide ou acryloylcaprolactame.

7. Procédé selon la revendication 1, caractérisé par le fait que la polymérisation est effectuée selon la technologie du moulage par injection-réaction.

8. Procédé selon la revendication 1, caractérisé par le fait qu'au composant B contenant l'activateur sont ajoutés, comme stabilisants, des cryptophénols, amines ou un mélange de CuI et KI en proportion molaire de 1/3.